# EUROPEAN PATENT SPECIFICATION

(11) **EP 3 574 715 B1**
(45) Date of publication and mention of the grant of the patent: **15.07.2020**
(21) Application number: 17821911.9
(22) Date of filing: 21.12.2017
(51) Int. Cl.: H05B 47/10, H05B 47/175

(54) **CONTROLLING A LIGHTING SYSTEM**
STEUERUNG EINES BELEUCHTUNGSSYSTEMS
COMMANDE D'UN SYSTÈME D'ÉCLAIRAGE

(30) Priority: 27.01.2017 EP 17153544
(43) Date of publication of application: 04.12.2019
(73) Proprietor: Signify Holding B.V., 5656 AE Eindhoven (NL)
(72) Inventor: KRAJNC, Hugo, Jose, 5656 AE Eindhoven (NL); BUDDE, Wolfgang, Otto, 5656 AE Eindhoven (NL)
(74) Representative: Verweij, Petronella Daniëlle
(86) International application number: PCT/EP2017/083984
(87) International publication number: WO 2018/137865

(56) References cited:
- EP-A1- 2 821 990
- WO-A1-2014/128594
- US-A1- 2016 037 213

## Description

### TECHNICAL FIELD

The present invention relates to the controlling of a lighting system, wherein lighting effects may be rendered or suppressed autonomously by the lighting system in certain circumstances to encourage a user to engage with the lighting system.

### BACKGROUND

WO2014/128594A1 discloses a method of associating a user interface element with at least one light source, wherein a lighting control property of a LED is adjusted, in response to a user interaction with the user interface element, wherein the adjustment is based on a property of the user interface element.

Connected lighting systems are becoming increasingly popular, particularly connected home lighting. Connected lighting refers to a class of lighting system in which the lights (luminaires) can be controlled based on the communication of data between the lights and a controlling device (such as a smartphone, tablet, smart-switch etc.) using network technology, according a network communications protocol or combination of such protocols, such as Zig-Bee, Bluetooth, Wi-Fi, Ethernet etc. This allows a connected lighting system to provide richer functionality than traditional lighting systems, for example allowing a user to directly control the lights using an application (app) executed on a smartphone, wearable device or other user device, and to easily incorporate new control points, such as light switches or sensors, into the lighting system without rewiring it. In terms of the level of control offered, users can for example change color or white tones, create and deploy groups of light settings to evoke specific events or moments in their life, and to render other rich lighting effects (sometimes referred to as "scenes"). Connected lighting systems also open up opportunities for new use cases, such as using lights to act as notification devices when external events happen, deter intruders from breaking it by simulating presence, etc.

Although beneficial, configuring and managing the many available features of a modern connected lighting system is not a trivial activity. As a result, various efforts have been made to simplify the ways in which user need to interact with these systems such that their daily routines are affected as little as possible while still benefitting from these new functionalities. In many such, cases the goal is to automate actions and get ahead of the user's wishes such that features are always triggered at the right time and place whilst placing minimal burden on the user.

The invention relates to a lighting control system according to claim 1 and a method of controlling a lighting control system according to claim 14.

### SUMMARY

Although in some circumstances some degree of simplification in the required interactions between the user and the lighting system may be needed to meet users' demands and expectations, the inventors of the present invention have recognized that simplifying the control points and mechanisms of a connected lighting system excessively can backfire: whilst from the perspective of the user, some reduction in the extent to which he (including she) has to engage with the system undoubtedly has benefits, if taken too far a point can come where the user becomes so disengaged that he is no longer actually making full use of the rich features the system has to offer, including new functionalities that may become available with new lighting system hardware/software (which the user may never become aware of). In other words, a user may get to a point where his relationship with the lighting system is "good enough" that has no motivation to change it; in which case what he may need from time to time, for his own benefit, is a gentle "nudge" from the system to help him appreciate that, in fact, he could for example be making better use of what the system has to offer or simply to remind him of the existence of the lighting system, as a way to take the user slightly off his everyday routines and present some changes without significant impact (which can be a way of demonstrating new features, but can also be a way of re-engaging the user with existing features, even if no new features are available at that time).

According to a first aspect of the present invention, a lighting control system for a lighting system comprises: an input configured to receive lighting control inputs from a user; a communication interface for communicating with the lighting system; a manual control module configured to control light emitted by illumination sources of the lighting system according to the lighting control inputs; an engagement module configured to determine from the user inputs a user engagement level for at least one of the illumination sources; a trigger engine configured to randomly generate control triggers for the at least one illumination source based on the user engagement level, wherein the probability of a control trigger being generated within a time interval increases as the user engagement level decreases; and an autonomous control module configured to respond to randomly generated control triggers for the at least one illumination source, when generated, by autonomously controlling the at least one illumination source to render a lighting effect or autonomously suppressing a lighting effect for the at least one illumination source.

That is, an element of randomized behaviour is introduced into the lighting system, to create a "playful" element, prompting the user to take note of and engage with the lighting system. This playfulness is biased towards those illumination source(s) for which the level of user engagement is considered/measured to be lower, to encourage the user to engage with that/those parts of the lighting system specifically.

The user engagement level for an illumination source(s) is a measure, generated by the lighting control system, of an extent to which the user has chosen to exert direct, manual control over that illumination source (e.g. via an app or switch). A low level of user engagement for a illumination source(s) can arise when there are no or minimal direct, manual interactions in the lighting control inputs between the user and that illumination source(s) over a time period (e.g. because the user is relying instead on automated control), and/or when any direct manual interactions between the user and that illumination source(s) which have occurred in the lighting control inputs over the time period use, at most, only a limited subset of the available illumination settings of that illumination source(s), or where more generally the user is only making use of the available settings in a restricted fashion. For instance, when the user repeatedly users the same features and there is no or minimal variation (e.g. always selecting the same scenes). By way of example, a simple situation might be the use of a limited subset of colour settings (e.g., using only white light settings for colour lamps), but a somewhat more complex situation might be the user always using the same repeated combinations of settings (e.g. the user always cycles between, say, three color scenes for a set of lamps - it may be that, overall, these make reasonably full use of the colours those lamps can provide, but only does so through a limited set of colour combinations corresponding to the three scenes).

Where a low level of user engagement has arisen because the user relies entirely or mostly on automated control based on schedules (set by the user and/or learnt by the system autonomously), sensors etc. with no or minimal direct manual control actions as a consequence, the controller might for example respond by randomly suppressing at least part of this automated control, forcing the user to control that illumination source manually for a while (e.g. via an app or light switch).

Where a low level of user engagement has arisen because the user consistently applies a limited range of lighting settings to an illumination source(s) that do not fully exploit its functionality (e.g. consistently setting the same or similar brightness and colour settings, or constantly recycling a limited number of lighting scenes, even though it is capable of a greater range, such that some illumination settings remain unused or underused for that luminaire), the controller might for example respond by randomly applying a different lighting effect, using at least one of the unused/underused illumination settings, to get the user's attention and provide him with a demonstration of the capability that he has not been exploiting (for example, rendering a new colour of the illumination, or a dynamic effect).

In embodiments, the engagement module may be configured, following the rendering or suppressing of the lighting effect, to monitor the user's behaviour for an intended reaction by the user, wherein if the user does not react as intended the probability of a control trigger being generated thereafter decreases. That is, so as to reduce the amount of randomized behaviour for users who do not respond favourably to it - for example, by reducing an engagement threshold for the at least one luminaire (see below)

If the user does react as intended, the probability of generating a control trigger may thereafter increase.

The user engagement level may be determined in dependence on a number of interactions between the user and the at least one illumination source in a time period.

Alternatively or additionally, the user engagement level may be determined in dependence on a measure of deviation applied by the user over a time period to at least one characteristic of light emitted by the at least one illumination source.

At least one parameter of a lighting effect rendered autonomously by the autonomous control module may be set in dependence on the measure of deviation.

Alternatively or additionally, the user engagement level may be determined based on a number of lighting effects selected by the user for the at least one illumination source over a time period.

Alternatively or additionally, the user engagement level is a relative user engagement level, determined by detecting a change in the behaviour of the user with respect to the at least one illumination source.

Alternatively or additionally, the user engagement level may be determined by determining a number of user input devices used to control the at least one illumination source by the user over a time period.

Alternatively or additionally, the user engagement level may be determined by determining an extent to which the at least one illumination source has been controlled by the autonomous control module over a time period.

The lighting control system may comprise an external data input, wherein the control triggers are generated in dependence on external data received threat.

The trigger engine may comprise a state selection engine configured to select one of a set of predetermined states for the at least one illumination source (defining its/their "mood") in dependence on the user engagement level and a set of randomized inputs, the control triggers being generated in dependence on the state selected for the at least one illumination source.

The trigger engine may be configured to compare the user engagement level for the at least one illumination source with an engagement threshold, and selectively generate control triggers at random for the at least one illumination source based on that comparison.

The trigger engine may be configured to adapt the engagement threshold for the at least one luminaire based on whether the user reacts as intended to the rendering or suppressing of the lighting effect.

In particular, the trigger engine may reduce the engagement threshold for the at least one luminaire if the user does not react as intended - effectively suppressing randomized behaviour for as long as the user engagement level remains above the now-reduced threshold. In some such cases, the trigger engine may increase that engagement threshold if the user does react as intended.

Note that "below" and "above" the engagement threshold in this context mean "less engaged" and "more engaged" respectively, and do not imply any particular representation of the engagement level (for example, although a little unintuitive, a lower engagement level could be represented by a higher numerical value - and in that case, a user engagement level below an engagement threshold would happen have a numerical value greater than the threshold).

A second aspect of the present invention is directed to a method of controlling a lighting system comprising implementing, by a lighting control system, at least the following steps: receiving lighting control inputs from a user; controlling light emitted by illumination sources of the lighting system according to the lighting control inputs; determining from the user inputs a user engagement level for at least one of the illumination sources; randomly generating control triggers for the at least one illumination source based on the user engagement level, wherein the probability of a control trigger being generated within a time interval increases as the user engagement level decreases; and responding to randomly generated control triggers for the at least one illumination source, when generated, by autonomously controlling the at least one illumination source to render a lighting effect or autonomously suppressing a lighting effect for the at least one illumination source.

In embodiments, the method may comprise implementing feature of any embodiment of the first aspect described herein.

A third aspect of the present invention is directed to a computer program product comprising code stored on a computer-readable storage medium and configured, when executed, to implement the method of the second aspect or any embodiment thereof.

### BRIEF DESCRIPTION OF FIGURES

For a better understanding of the present invention, and to show how embodiments of the same may be carried into effect, reference is made to the following figures in which:
Fig. 1 shows a schematic block diagram of a lighting system;
Fig. 2 shows a schematic perspective view of a lighting system located in an environment;
Fig. 3 shows a high-level functional block diagram for a lighting control system;
Fig. 3A shows a more detailed functional block diagram for one example implementation of a lighting control system;
Fig. 4 shows a flowchart for a method of controlling a lighting system.

### DETAILED DESCRIPTION OF EXAMPLE EMBODIMENTS

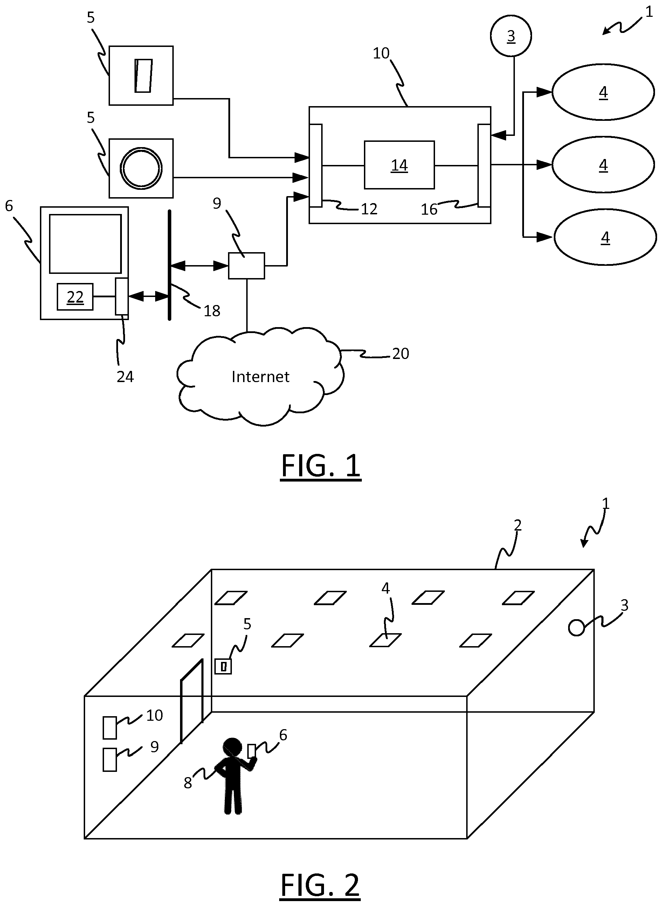

With reference to Figures 1 and 2, the described embodiments of the present invention provide a connected lighting system 1, which exhibits certain artificial intelligence (AI) behaviours such that, from the perspective of a user 8, the system has a certain autonomy associated with intelligent thought. The AI behaviour is in the form of occasional randomized "playful" behaviour, to render or suppress certain lighting effects. Although randomized, this behaviour is biased towards those parts of the lighting system 1 where user engagement levels are lowest. The aim is to maintain or increase levels of engagement between the user 8 and the lighting system 1 across the lighting system 1 as a whole without becoming overly burdensome for the user 8.

Figure 1 shows a schematic block diagram of the lighting system 1, and Figure 2 shows an example of how the lighting system 1 may be arranged in an environment 2 so as to illuminate the environment 2. The environment 2 can comprise an indoor space within a building, such as one or more rooms and/or corridors (or part thereof) and/or may an outdoor space such as a garden or park, or a partially-covered space such as a stadium or gazebo (or part thereof), or a combination of such spaces. In the described examples, the environment 2 is a user's home, or part of his home spanning several rooms of the home, and possibly extending into an outdoor space such as a garden or balcony. The luminaires 4 can for example be ceiling-mounted (as shown), so as to be able to illuminate a surface below them (e.g. the ground or floor, or a work surface), mounted on the wall, embedded in the floor or items of furniture etc. or any combination thereof. Each of the luminaires 4 comprises at least one illumination source, i.e. a light emitting device such as an LED-lamp, gas-discharge lamp or filament bulb, plus any associated housing or support. Each of the luminaires 4 may take any suitable form such as a ceiling or wall mounted luminaire, a free standing luminaire (e.g. table lamp, desk lamp or floor lamp etc.), a wall washer, or a less conventional form such as an LED strip, a luminaire built into a surface or an item of furniture, or any other type of illumination device for emitting illumination into the environment 2 so as to illuminate the environment 2. For example, in the case of functional lighting, to emit light of sufficient intensity and over a sufficiently large area that the user 8 in the environment 2 can see his surroundings as a consequence of the illumination or, in the case of mood lighting, lower-intensity light used to create a desired ambience, for example to highlight specific colours in the environment 2.

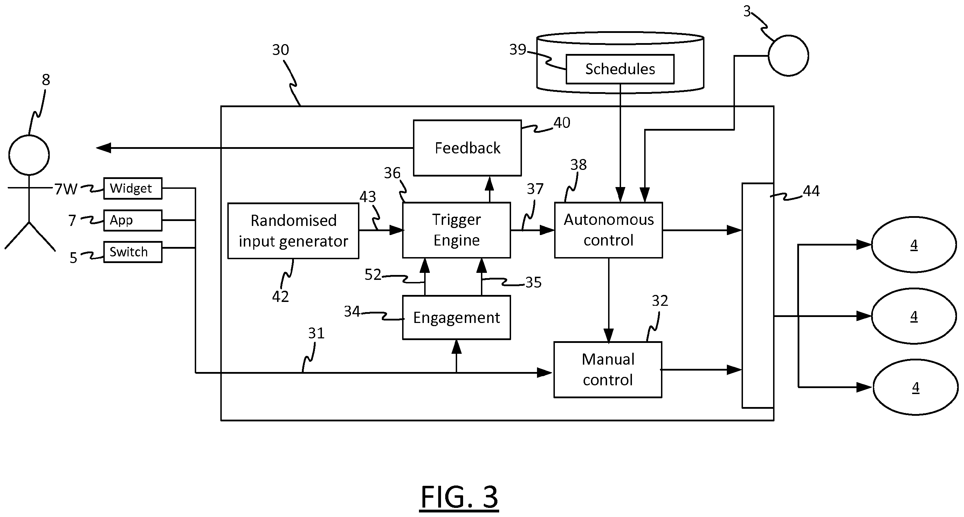

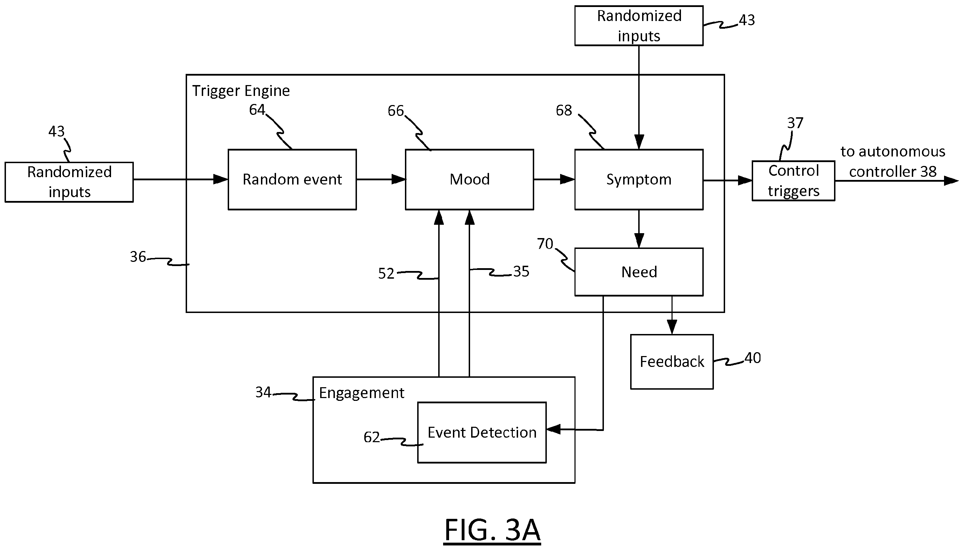

In addition to the luminaires 4, the lighting system 1 is shown to comprise a central control device in the form of a gateway 10, sometimes referred to as a lighting bridge. The bridge 10 is shown to comprise a first communication interface 12, a second communication interface 16 and a processor 14 connected to the first and second interfaces 12, 16. Each of the luminaires 4 is shown connected to the bridge 10 via the second interface 16. For example the luminaires 4 may form a wireless mesh network where at least some of the luminaires 4 act as relays to relay data between the bridge 10 and other luminaires 4 (that is, at least some of the luminaires 4 connect to the bridge 10 indirectly, via one or more other luminaires 4). This wireless mesh network configuration can extend the range of the network beyond the direct communication range of the second interface 16. For example, the second interface 16 may be a ZigBee interface, where the luminaires 4 and the bridge 10 form a ZigBee network. In order to control the luminaires 4 via the bridge 10, at least one user input device can connect to the first interface 12 of the bridge 10, for example via a wireless connection such as Wi-Fi or Bluetooth or a wired connection e.g. based on Ethernet. The user input device can for example be a general-purpose user device 6 executing a lighting control app (7, Figure 3) such as a smartphone, tablet, wearable device or any other general-purpose computing device, or a light switch 5 equipped with network communication technology ("smart switch"). A smart switch 5 can take the form of a simple on/off switch, a dimmer switch to provide variable brightness (i.e. luminous intensity) or more advanced switches from which, say, different colours (i.e. chromaticity) of illumination can be selected. In this example a user device 6 is shown connected to the bridge 10 via a local area network 18 provided by a network router 9, such as a Wi-Fi router. In some cases it may also be possible to connect to the bridge 10 from an external network 20 such as the Internet (e.g. e.g. via the router 9) to allow the user 8 to control the luminaires 4 remotely. The user device 6 is shown to comprise a processor 22 and a network interface 24 via which the processor 22 of the user device 6 can connect to the local area network 18, for example via a Wi-Fi connection. Also shown connected to the bridge 10 are one or more sensors 3 arranged in the environment 2 such that changes in the light emitted by one or more of the luminaires 4 can be effected based on inputs received from the sensors 3. The sensors 3 can for example be motion sensors or other presence sensors that can detect the presence of the user 8 in the environment, or other forms of sensor for example to detect ambient light levels. The sensors 3 are shown connected to the second interface 16, and can for example be incorporated in the mesh network. Alternatively, at least one of the sensors 3 could for example connect to the bridge 10 via the first interface 12, for example via Wi-Fi or Bluetooth, or to the luminaires 4 directly. For example, the sensor 3 may be connected to the bridge 10 via the local network 18. Alternatively the user device 6 can connect to the bridge 10 directly, for example via a Bluetooth connection. It is also possible to implement a connected lighting system without the bridge 10, in which case the various user input devices 5, 6 can control the luminaires 4 by communicating with them directly, for example using Bluetooth (such that neither a bridge 10 nor a router 9 required); alternatively, the luminaires 4 may connect directly to, say, the local network 18, so they can be controlled via the router 9 (such that no bridge 10 required). Likewise, it is possible for the luminaires 4 to be controlled based on inputs from the sensors 3 without a bridge 10, for example by incorporating the sensors 3 into the local network 18 or based on direct communication between the sensors 3 and the luminaires 4, user device 6 or switches 5.

By way of example Figure 2 shows a smart switch 5 disposed in the environment 2 along with the gateway 10 and router 9 with the user device 6 held by the user 8. However as will be appreciated this is merely an example for the purposes of illustration and various other arrangements and configurations are equally viable.

Figure 3 shows a functional block diagram of a lighting control system 30. The lighting control system 30 represents functionality for controlling the luminaires 4, which can be implemented anywhere within the lighting system 1. For example the lighting system controller 30 can be implemented by code executed on the processor of 14 of the bridge 10, on the processor 22 of the user device 6, or even at one or more of the light switches 5 and/or at one or more of the luminaires 4. The functionality of the lighting control system 30 can also be implemented in a distributed fashion, for example (and without limitation) part may be implemented at the bridge 10 and part may be implemented at the user advice 6. Also, the possibility of implementing part of this functionality remotely, for example at least in part on one or more devices connected to the external network 20, is also not excluded. For example some all of this functionality may be implemented as a backend service, such as a cloud service.

The lighting control system 30 is shown to comprise various functional modules 32-42, each of which represents a part of this control functionality of the lighting system 30; namely a manual control module 32, an engagement module 34, a trigger engine 36, and autonomous control module 38, a feedback module 40, and a randomised input generator 42. The lighting control system 30 is also shown to comprise a communication interface 44 via which the lighting control system 30 can communicate with the luminaires 4 for controlling light emitted by the luminaires 4. Depending on the implementation, the communication interface 44 can for example comprise the second interface 16 of the bridge (in the case of the control system 30 being at least in part on the bridge 10), and/or the network interface 24 of the user device 6 (in the case of the control system 30 being implemented at least in part on the user device 6), and/or some other means of communication that allows the lighting control system 30 to communicate with the luminaires 4 to control at least one characteristic (e.g. colour, intensity etc.) of their emitted light in this manner. In general, the communication interface 44 represents any suitable combination of hardware and/or software to affect this communication.

The manual control module 32 receives lighting control inputs 31 from the user 8. These can be received from a variety of user input sources, such as the light switch or switches 5, or an application 7 executed on the processor 22 of the user device 6. In the case of the latter, the lighting control inputs 31 can be received directly from the application 7 via a user interface of the application 7, or alternatively from a so-called "widget" 7W associated with the application. As is known in the art, a widget represents an alternative means of accessing a (typically limited) set functions provided by an application 7, usually from a dedicated interface provide by an operating system of the device 6 (rather than via a user interface of the app 7 itself) such as a dashboard area, notification area or other operating system user interface.

The manual control module 32 controls the luminaires 4 via the communication interface 44 to adjust at least one characteristic of their emitted light according to the received lighting control inputs 31, which are direct manual control inputs provided by the user 8. This allows the user 8 to manually control the light emitted by the luminaires 4 as he desires. In particular, the user 8 can specify certain subsets of the luminaires 4 to render his selected lighting effects, for example he may control all of the luminaires in any particular room of his home to render a selected lighting scene. Accordingly, the lighting control inputs 31 can specify not only lighting effects chosen by the user 8 to be rendered but also which of the luminaires 4 should render the selected effects. Of course, this does not necessarily require the user 8 to specify every last detail of the light to be emitted. For example, modern lighting systems allow a user to select a lighting scene or other lighting effect, which in essence allows the user 8 to specify an overall impression to be created by the emitted light, for example by selecting a photograph, video clip or other image. This can for example involve the user 8 explicitly selecting colours from an image he has selected, or the selection of colours from the user's selected image can be left to the system 30. The system 30 may also be responsible for creating dynamic effects in the emitted light, with varying degrees of input from the user 8 depending on the implementation of the system 30. That is to say, even though the manual control module 32 is driven by direct, manual selections conveyed by the lighting control inputs 31 from the user 8, it can still apply a degree of automation to carry out those selections according to the expectations of the user 8 who has made the selection, where the degree of automation applied is highly context-dependent. For example, the manual control module 32 may allow the user 8 to select or tune time-related parameters, such transition time(s), speed(s), or other dynamic parameter(s) of a dynamic effect (or of a transition between lighting effects, which may or may not be dynamic themselves), which the manual control module 32 then applies to render the dynamic effects (or the transition between effects).

By contrast, the autonomous control module 38 controls the light emitted by one or more of the luminaires 4 autonomously, based on inputs from one or more control input sources other than the user 8. For example the autonomous controller 38 may control the luminaire based instead on inputs received from the one or more sensors 3 located in the environment 2 and/or based on one or more lighting schedules 39 stored in a memory accessible to the lighting control system 30 (which can be locally or remotely accessible memory, or a combination of both) using a suitable clock signal (not shown) to track the passage of time. Of course, this does not completely exclude a degree of manual oversight - for example, the lighting schedules 39 may be set by the user 8 in advance and the user 8 may also specify how the autonomous control module 38 should respond to inputs from the sensors 3, e.g. by linking each sensor 3 to a set of one or more of the luminaires 4. However once the user 8 has configured the system, thereafter the autonomous control 38 can operate to control the luminaires 4 without requiring further input from the user 8. It is also possible in some cases for the system 30 to learn schedules 39 and/or other autonomous behaviour itself, for example based on monitoring and analysing the user's behaviour - so-called predictive behaviour. In any event, however the autonomous behaviour comes about, the autonomous control module 38 is capable of controlling at least one of the luminaires 4 without direct, manual inputs 31 from the user 8.

That is to say, although the manual control module 32 may apply a varying degree of automation to carry out actions when instructed by the user 8, and the autonomous controller 38 may exhibit behaviour that is to varying extents dictated by the user 8, there is nevertheless a clear distinction between (direct) manual control and autonomous control that will be apparent in context. In particular, the manual control module 32 only applies automation to the extent that it is necessary to carry out a current instruction from the user, whereas the autonomous control module 38 allows the user to set future (and typically recurring) behaviour in advance. For example, in a scene-based system of the kind described above, the autonomous control module 38 may select lighting scenes autonomously, whereas the manual control module 32 may rely on manual scene selection by the user 8. That is, the manual control module 32 may only cause lighting effects to be rendered by the luminaires 4 when selected by the user 8 (such that a change of lighting effect is effected by the manual control module 32 only when explicitly instructed by the user 8, as conveyed by lighting control inputs 31 from a switch 5, app 7, widget 7W etc.), whereas the autonomous controller 38 can select lighting scenes autonomously to be rendered by the luminaires 4 (such that the autonomous control module 38 can effect a change of lighting effect autonomously, for example in response to a sensor input from a sensor 3 or according to a lighting schedule 39).

As explained below, in accordance with the present disclosure, an additional source of inputs to the autonomous control module 38 that can cause the autonomous control module 38 to effect a change of lighting scene for one of the luminaires 4 or a set of the luminaires 4 are special control triggers 37 generated the trigger engine 36 for that (set of) luminaire(s), which in turn are generated in dependence on the randomized inputs 43 from the random input generator 42 and also a user engagement level 35 determined for that (set of) luminaire(s).

This is, at least in part, how the lighting system 1 as a whole (or at least one or more of its individual luminaires 4) comes to exhibit "playful" behaviour i.e. certain personality, behaviours, or emotions, such that from the perspective of a user 8 the lighting system 1 has a certain autonomy - almost like a pet. The intention is for the lighting system 1 to require somewhat more attention than a conventional connected lighting system, while still keeping the relationship between the user 8 and the lighting system 1 on the playful side. This is intended to cause the user 8 to engage with the lighting system 1 in a certain way, but is designed in a way that is does not become overly burdensome for the user 8 though the imposition of excessive periodic, menial tasks. To this end, various different mechanisms are described, in which the connected lighting system can attempt to maintain a certain level (or even increase the level) of user engagement by adopting different "personality traits" or behaviours as a response to different events or triggers common to the user's every-day routines, or even in a controlled random pattern. As a result, the lighting system becomes more dynamic, ensuring that the user 8 interacts with it in different or unpredictable ways, takes care of it, and forms a certain emotional bond as he/she might with an actual pet.

To this end, the engagement module 34 monitors the lighting control inputs 31 as they are received over time. A function of the engagement module 34 is to identify any of the luminaires 4 for which levels of engagement between that/those luminaires and the user 4 are low. That is, to determine the user engagement level 35 for at least one of the luminaires 4 denoting an extent to which the user 8 has been engaging with that luminaire 4 directly over a time period (e.g. an extended time period of several hours, days or even months), during which the lighting control inputs 31 are monitored by the engagement module 34 to determine the user engagement level 35.

The trigger engine 36 generates each of the control triggers 37 for a particular luminaire 4 or set of luminaires 4 based on the user engagement level 35 as determined for that (set of) luminaire(s) 4 by the engagement module 34 and also based on the randomised inputs 43 that are generated by the randomised input generator 42. That is to say, the control triggers 37 are generated in a randomized fashion using the randomly generated inputs 43, but are nevertheless generated such that the probability of generating a control input is greater for luminaires 4 for which the user engagement level 35 is lower. That is, such that control triggers 37 are statistically more likely to be generated for luminaires 4 with lower levels of user engagement. In other words, at least some of the playful behaviour is created by randomly generating the control triggers 37 for one of the luminaires 4 or a set of the luminaires 4 in the lighting system 1 based on a user engagement level 35 determined for that luminaire(s), such that, although randomized, the probability of a controlled trigger 37 being generated within a given time interval increases as the user engagement level 35 decreases.

In some implementations, certain "engagement" thresholds may be set, and the randomised inputs are generated only after crossing one or some of these thresholds, such that randomized behaviours can only occur when at least one of these threshold is crossed for luminaire(s) for which the user engagement level(s) exceed the applicable engagement threshold(s) (and is suppressed otherwise). That is, the trigger engine 36 may compare the use engagement level 35 (or engagement levels) with an engagement threshold (or thresholds), and selectively generate control triggers 37 at random based on the comparison, such that control triggers are generated when the engagement level 35 falls below the engagement threshold (or when at least one of the engagement levels falls below the applicable threshold), and are not generated when the engagement level 35 exceeds the threshold (or when all of the levels exceed the applicable threshold(s)). This would also ensure that lights that the user usually controls never exhibit random behaviours, which in some cases might be beneficial (as it could e.g. confirm to the user that this is a playful thing and not an overall system malfunction). The same user engagement threshold can be set across all luminaires 4, or different thresholds may be set for different luminaires or sets of luminaires.

In some cases, the engagement threshold can be a variable threshold that is set in dependence on the user's behaviour (see below).

The autonomous control module 38 responds to a control trigger 37, when generated for a luminaire 4 or set of luminaires 4, by autonomously controlling that (set of) luminaire(s) to render a lighting effect. The randomly applied lighting effect can for example be a different colour and/or intensity of illumination, and can be dynamic i.e. to introduce fluctuations in colour/intensity that are visible to the user 8. Alternatively or in addition, the autonomous control module 38 may respond to the control trigger 37 by autonomously suppressing a lighting effect that would otherwise be rendered by that (set of) luminaire(s) 4 were it not suppressed, for example preventing a lighting effect from being triggered according to a user-defined schedule 39 or in response to a certain input from sensor 3.

The randomised inputs 43 can for example be random or pseudorandom sequences generated by the random input generated 42. Means of generating (pseudo)random sequences are known in the art and are therefore not discussed in further detail herein. The randomized inputs 43 can for example be used in conjunction with the user engagement level(s) 35 to determine times at which the triggers 37 are generated, which luminaire 4 or luminaires 4 they should be triggered for, to randomly select one or more parameters of a lighting effect to be applied autonomously (where applicable), to randomly select one or more of the lighting schedules 39 to be suppressed, one or more of the sensors 3 whose inputs are to be ignored etc.

A low level of user engagement can arise for a particular luminaire 4 or set of luminaires 4 where the user 8 relies heavily on automated control for that luminaire(s) over the time period, or where the user 8 consistently applies a limited range of illumination settings to that luminaire(s) over the time period that does not fully exploit its full range of available illumination settings (or a combination of both). That is, a low level of user engagement for a particular luminaire(s) can arise when there are no or minimal direct manual interactions between the user 8 and that luminaire(s) 4 over a time period, when the direct manual interactions that do occur between the user 4 and that luminaire(s) 4 over a time period are not exploiting the full capabilities of that luminaire 4, or a combination of both.

To further illustrate the concept, various examples of factors that can influence the user engagement level 35, and how the system 30 might respond, will now be described. Note, for the sake of simplicity, these examples are described in terms of a particular one of the luminaires 4, for which a user engagement level 35 is determined and for which lighting effects are rendered or suppressed in response to control triggers 37 generated for that luminaire based on the user engagement level 35 determined for it. However, the description pertains equally to a set of multiple luminaires (or even to the lighting system 1 as a whole), for which an overall and/or individual user engagement levels 32 can be determined and where lighting effects are rendered or suppressed for that set of luminaires based on control triggers 37 that are generated based on the user engagement level(s).

As one example, a low level of user engagement can arise for a particular luminaire where the user 8 is leaving control of a particular luminaire 4 entirely or mostly to the autonomous control module 38. In this case, the user engagement level 35 may be determined in dependence on a number of interactions between the user 8 and that luminaire 4 over a period of time. Alternatively or in addition, determining the user engagement level 35 can comprise determining an extent to which the luminaire has been controlled by the autonomous control module 38, for example relative to the manual control module 32. For example, the engagement module 34 may determine a number of control events (e.g. a number of lighting effect changes) effected by the autonomous control module 38 over the time period, and optionally a number of control events (e.g. lighting effect changes) rendered by the manual control module 32 over that time period according to the ligating control inputs 31 for comparison. That is, "engaging" in this particular context means that the user is choosing to directly control that the luminaire from a switch 5, app 7 etc. as opposed to leaving the control of that luminaire 4 entirely or mostly to the autonomous control module 38 based on for example predetermined lighting schedules 39, inputs received from one or more sensors 3 etc.

In this case where the user 8 is exerting no or minimal direct manual control over a particular luminaire 4, and is relying instead on the automated control module 38, the trigger engine 38 may for example randomly suppress the automated control forcing the user to engage manually with the luminaire 4. For example, by suppressing at least one of the schedules 39 and/or causing inputs from at least one of the sensors 3 to be ignored for a while.

As another example, a low level of user engagement can also arise where the user 8 is not making full use of the capabilities of a particular luminaire 4, for example because he is consistently using a limited range of brightness and/or colour settings, and/or selecting a limited number of lighting effects (i.e. scenes). In this case, the user engagement level 35 for that luminaire(s) can for example be determined in dependence on a measure of deviation applied by the user to at least one characteristic of light (e.g. a range or other set of brightness values, colour values etc.) emitted by that luminaire 4. Alternatively or in addition, it can be determined in dependence on a number of lighting effects selected by the user 8 for the at least one illumination source over the time period.

A low level of engagement can also arise where the user 8 exhibits a change in behaviour with respect to a particular luminaire 4 such that he engages with it less than he used to. For example, when the user 8 first installs the luminaire 4, he may try out a wide range of different settings, but stops doing so over time as he loses interest. In this case, the user engagement level 35 can be a relative user engagement level, determined by detecting a change in the behaviour of the user with respect to that luminaire. That is, the user engagement level 35 may be determined in dependence on a measure of deviation from programmed behaviour in view of earlier user input (e.g. the user 8 experimenting when the lighting system 1 is first installed) and current user input (e.g. the user 8 is now only using basic functionality).

In the case that the user engagement level 35 is low because the user 8 is under-utilising a certain luminaire 4 over the time period, the trigger engine 38 may respond by randomly causing that luminaire 4 to render a lighting effect, using at least one unused lighting setting to show the user 8 what he is missing. That is, the range of the light effects generated based on randomization can be determined by the range of light effects as generated during the time period manually. That is, at least one parameter of an autonomously rendered lighting effect rendered as a consequence of the low deviation can be set in dependence on the measure of deviation, for example to something the user would not normally choose outside of the narrow range of settings he usually applies (e.g. a colour or range of colours that the user does not normally chose).

As another example, the user engagement level 35 for a given luminaire 4 can for example be determined by determining a number of user input devices 5, 6 used to control the at least one luminaire by the user 8, where the use of a smaller number of devices, e.g. just a particular lighting switch 5 or just a widget 7W, and not the (full) app 7 corresponds to a low level of engagement. That is, the extent to which randomization effect is applied by the trigger engine 37 can be based on the variation in the user input sources over the time period, or since a particular user input 31. In this case, if the user 8 attempts to select a lighting effect using the widget 7W, the trigger engine 36 may respond by suppressing the selected lighting effect immediately, forcing the user 8 to use the (full) app 7 instead.

Further examples of the type of behavior induced by the trigger engine 36 are given below.

The feedback module 40, in certain circumstances, outputs a message to the user 8 for example via a user interface of the user device 6 to inform the user 8 when a lighting effect has been autonomously rendered or suppressed, and the reasons for doing so.

As noted, ultimately the purpose of randomly suppressing or rendering lighting effects, in a playful fashion, is to encourage the user 8 to engage with the lighting system 1, and in particular the luminaire 4 for which the light effect has been autonomously rendered or suppressed. Accordingly, another function of the engagement module 34 is to monitor the user's behaviour thereafter to determine whether this playful behaviour by the lighting system one has had an effect of causing the user 8 to engage with the lighting system 1 as intended. For example in some cases it might be that if the user 8 does not respond favourably to the playful behaviour, e.g. if he does not engage with the system 1 as a consequence (or shows signs that he is irritated by it), the engagement module 34 may prevent or at least reduce the likelihood of similar playful behaviour being exhibited in the future. For example, where the randomized behaviour is exhibited to elicit an intended response, the engagement module 34 can determine whether or not the user 8 responds as intended (possibly within a response time limit). This is represented in Figure 3 by a second input 52 from the engagement module 34 to the triggering engine 36, representing the fact that even where the user engagement level 35 remains low for the luminaire in question the probability of generating further control triggers 37 for those luminaires can, in fact, be reduced (possibly to zero) in the event that the user 8 does not respond to the playful behaviour as intended. On the other hand, if the user 8 does respond favourably is intended to this playful behaviour, this may increase the probability of such behaviour being exhibited by the system one in the future, because the user 8 has responded favourably to it. In this respect, the system 30 may allow the user 8 to override any randomised behaviour that he does not like, for example via the app 7.

By way of example, the engagement level can determine whether the user 8 has reacted favourably to the randomized behaviour as follows.

If the user 8 overrides the applied random effect within a certain time window and returns to the previous setting, it may be an indication that the user 8 has not reacted positively. E.g. as a playful thing, the lamps in the hallway turn on at different brightness levels. The user 8 doesn't like this and immediately after noticing it opens the app and recalls the usual scene (or manually adjusts the low-level brightness lamps).

However, if the user 8 does not override these random effects within the time window, or if he/she actually adopts or saves that new or recommended setting, then it may be an indication that the user has responded favourably. E.g. the lamps in the living room are bored and therefore deploy the colors of a scene in a different order. The user 8 actually likes it and decides to save that scene.

The system can also make use of sensors to create user insights, and to provide insight into the user's to playful behaviour that has been exhibited or the user's expected reaction were playful behaviour to be implemented. For example, if a scene is changed, it is important to track whether a user is also close to it, such that he or she can witness what has changed. For that, a presence detector or Bluetooth proximity detection of the user's smart phone can be used. In a more advance example, the system could find out the activity level of a user (e.g. how frequent does the presence detector fire, or how much does the signal strength of the Bluetooth or Wi-Fi reception of the user's smart phone change); the more a system understands the user's activity, the better it can "plan" its control.

In this manner, the system 30 can provide a closed feedback loop such that the user-response to randomization influences the degree of further randomization. Thus, if a user overrides a randomization performed autonomously (thereby mitigating it at least partially), the level of randomization might decrease in the future. Conversely, if the user starts playing with the lamps more after a control trigger 37 has been applied, the sensitivity of the system 30 to falling levels of user engagement may increase, such that these triggers 37 are likely to occur if engagement levels 35 drop even slightly. That is, the extent to which randomization effects are applied in the future (that is, the probability of such effects being triggered in the future) may be dependent upon how much effect the playfulness has had: e.g. a future differentiation level may be compared to an earlier differentiation level to determine whether it has had the intended effect.

For example, in the 'engagement threshold' implementation mentioned above, if the user does not react as intended to a randomized behavior relating to a particular luminaire or set of luminaires, the engagement threshold for that luminaire/set could be reduced in response - effectively suppressing randomized behavior for that luminaire/set until the user engagement level 35 drops further to the reduced threshold; conversely, if the user does react as intended, that user engagement level may be increased instead, so that randomized behavior continues at higher engagement levels, with the aim of boosting the engagement level 35 further still.

Although not shown in Figure 3, the generation of control triggers 37 can be influenced by data from other sources, for example external data (time, weather, data relating to the user's mood etc.)

In some cases, a form of hysteresis could be used in terms of the engagement level 35; e.g. if the user engagement level 35 drops below engagement threshold X start applying random effects, but turn them off only if level goes above engagement threshold Y>X. This helps to prevent excessive fluctuations in the system's behavior.

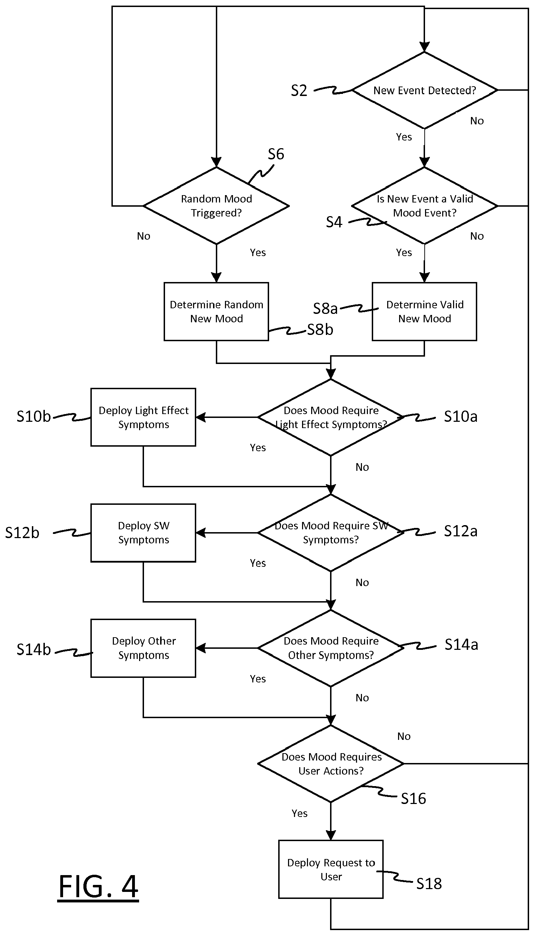

In one example implementation, the control system 30 can be implemented according to a hierarchy illustrated in the functional block diagram of Figure 3A and the flow chart of Figure 4, which ar3 described together. In this example, a mood engine 66 of the trigger engine 36 selects between a number of different "moods" (that is, a set of predetermined states) for the lighting system 1, or individual parts thereof (that is, individual luminaires 4 or sets of luminaires 4). Mood changes are at least partly driven by a combination of the randomized inputs 43 and the user engagement level(s) 35. Different parts of the system 1 (that is, different individual luminaires 4 or sets of luminaires 4) can have different moods simultaneously and exhibit mood changes independently in dependence on their own user engagement level(s) 35. Again, although for simplicity the examples below are described with reference to a particular luminaire, this applies equally to a set of luminaires 4 or the lighting system 1 as a whole depending on the context.

In this example hierarchy, the engagement module 34 comprises an event detection engine 62, which recognizes (S2, Figure 4) different events and parameters in the life of the user 8 and/or the lighting system 1 and determines (S4) whether any of these is a valid trigger for the mood engine 66 of the trigger engine 36. In particular, events causing a significant reduction in the user engagement level 35 for a particular luminaire 4. The trigger engine 36 also comprises a random mood trigger engine 36, which the randomised input generator 43 feeds into, and which can act as alternative source of events for the mood engine 66 but which does not get event activated as a result of an internal or external event or pattern but rather randomly generates events (S6) that might, in turn, trigger a new mood. Thus, mood changes for a particular luminaire 4 are triggered in a randomized fashion in response to the randomized inputs 43 but also in dependence on the user engagement level 35 for that luminaire 4, such that certain mode changes are more likely when the user engagement level 35 is low.

The mood engine of the trigger engine 66, upon receiving a mood trigger from the event detection engine 62 or the random event engine 64, can determine whether that trigger should cause a mood change (S8a and S8b, respectively), and if so adopts an appropriate new mood for the luminaire 4.

A symptom engine 68 of the trigger engine 36, upon a mood being determined by the mood engine, determines in particular whether a lighting effect should be rendered or suppressed (S10a) for that luminaire 4, and if so renders or suppresses the effect (S10b) as applicable with a suitable control trigger 37. In particular, the symptom engine 38 can generate the control triggers 37 to trigger the rendering or suppressing of a lighting effect. As indicated in Figure 3A, the generation of a particular control trigger 37 can be based not only on the current mood but also on the randomized inputs 68, to create less predictable behaviour. For example, such that certain effects are generated in a randomized fashion for certain moods. That is, in general, mood changes can occur in a randomized fashion and/or control triggers for the current mood can be generated in a randomized fashion. In any event, however the element of randomization is introduced (that is, however the randomized inputs 43 are used to create randomized behaviour), the randomized behaviour is targeted such that is more likely to occur for luminaires 4 with lower user engagement levels 32.

The symptom engine 68 may also determine (SI2a) whether to generate a set of effects on software elements of the system, such as the app 7, to inform or hint to the user that a certain mood has been adopted (SI2b); and/or determine (SI4a) whether to exhibit symptoms of the current mood in some other fashion (S14b). This could for example be by way of a message sent via external network 20, for example an email or social media post etc.

A need engine 70 of the tiger engine 36, upon a mood being determined by the mood engine 66 and symptoms being determined by the symptoms engine 68, decides (S16) what actions, if any, the user 8 should carry out in order to alter the current mood (if applicable). That is, the need engine 70 can determine an intended reaction for a given control trigger 37, i.e. it can determine how the user 8 is intended to react to that trigger 37. The event detection engine 62 then monitors the user's behaviour for the intended reaction, as conveyed by the need engine 70. As noted, the future behaviour of the trigger engine 36 is influenced in dependence on whether the user 8 does react as intended. In some cases, the intended reaction may be conveyed (S18) to the user from feedback module 40, for example via the app 7.

Note, although shown in sequence, the steps of Figure 4 can be performed in any order or in parallel, and in any event are repeated over time to provide ongoing behavioural changes.

To further illustrate the techniques of the present disclosure, a number of example scenarios will now be described.

### Example 1:

The luminaires 4 are distributed both physically and virtually among different rooms for ease of use. Due to the user's everyday activities, the lamps in the kitchen and living room get used quite a lot, while the ones in the hallway are for simplicity set on a timer to automatically go on and off at predefined times; that way the user never triggers scenes on the hallway at all, while in the living room and kitchen a lot of different scenes are triggered manually depending on the user's mood.

Over time, the control system 30 detects that lights in the hallway are not being manually activated and that is noticed by the event detection engine 62 as a valid trigger for a possible mood change that would enhance the user engagement with the system 1, in particular with the lights in the hallway. As a result, this event is passed on to the mood engine 66, which upon analysis of the trigger determines that the hallway lamps should be "jealous" of the lamps in the kitchen or living room (as they get used much more frequently). The symptom engine 68 determines that for this situation the correct symptoms that the lamps should adopt are changes in the timers (i.e. schedules) normally used for the hallway, forcing the user 8 to set them on/off manually. Simultaneously, the need engine 70 decides that this might be an impactful change for the user 8 without proper explanation and as such prompts a notification in the user's smartphone app 7 indicating e.g.: "the hallway is feeling jealous that you spend so much time with the other lights and now with it.... Why don't you try setting the lights manually this week to get their spirit up?" In this way, the user 8 is prompted in a safe way to interact more with lamps that he might have forgotten about or have automated to the point that there is no longer any need to worry about them.

The control system 30 will, in the coming days, analyse how the user interacts with the lights in the hallway. If the event engine 62 determines that a sufficient level of manual control has taken place it may cause the timers to be re-instated, by triggering a mood change away from jealous, since that is in the end the desired effect by the user 8; if not, the system 30 may decide to re-trigger notifications to the user a few more times hoping for a reaction.

### Example 2:

In a similar situation, the user 8 goes on holiday for a few weeks, such that engagement levels drop across the system 1 as a whole. Upon returning, the event engine 62 determines that the user has connected after a long period of time and that is a valid trigger for a new mood. The mood engine 66 decides that the system should be "happy" that the user 8 is finally back. As a result, the symptom engine 68 decides that happiness should be exhibited across the lighting system 1 as a whole (i.e. regardless of which devices/rooms get used more often), and to achieve this decides that some new "celebration" scenes should be created to see if the user 8 finds these more appealing that the old ones. The system 30 may then decide to simply deploy those new scenes automatically, hoping to catch the user's attention, or may alternatively decide to inform the user via the smartphone 6: "Hey, welcome back, we missed you! To celebrate you're back we came up with these new cool scenes for you, wanna try them...?". As before, the system 30 may decide to abort the current mood immediately if a negative response is detected by the user, or may also decide to give it a few more times over the following days.

### Example 3:

The system 30 in this case detects that the user 8 always defaults to the same set of scenes over the same large periods of times (i.e. scenes do not get re-triggered frequently throughout the day). The event engine 62 detects this pattern and considers it a trigger for a new mood, which the mood engine 66 determined to be "boredom". The mood engine 66 informs this to the symptoms engine 68 which decides that it is necessary to add some dynamic effects to the scenes, without being too invasive or changing the ambiance too much. The symptom deployed is a slow brightness loop over the lamps in the room (i.e. one of the lamps first has a gradual change of brightness, then it recovers back to its previous level while the next lamp goes through the same change, and so on). This effect can be constant over time, can become faster or can have larger brightness changes. In this situation, the goal is to get the user 8 to trigger a new scene, so the need engine 70 may decide that no information will be given to the user, as this is not a harmful enough effect that requires mitigation via an app notification. As before, the system 30 may decide to terminate the effect after a limited period of time or after the user 8 actuates on those lamps.

### Example 4:

Over time, the system 30 may also conclude that only a specific type of controls are being used (e.g. the app is not used directly, but instead widgets are commonly used). The event engine 62 determines this might be reason for a mood change and reports this to the mood engine, which in turn decides to make the system more "playful". In this case, the goal is to keep the user 8 changing between control methods over a short period of time. For this situation, no specific symptoms are used as it relates to the controls and not the lamps, but instead a series of notifications are generated at the user device 6 by the need engine 70 to tease the user 8. For example, these can be something like:
"Ups, I fell down and the widgets got lost... I guess you'll have to use the app while I gather them"
"Remember that switch you bought some months ago? It's more than just decoration, you know..."
   - "Scenes are so old-fashioned, cool users customize everything, why don't you control the lamps individually?"
   - "I might have swapped the names of two rooms in your house, sorry! You'll probably have to check all of them to see which ones they are"

By means of this the user 8 is invited to try different mechanisms with clear indications of what he/she should do. To avoid negative impact, these notifications could also include some sort of opt-out button to go back to the usual settings.

### Example 5:

In this particular scenario, the lighting system 1 of the user is linked to that of his parents, siblings, or friends. This link can be created for any number of reasons, for example to make setup of a system easier by copying the settings of another one, receive warnings when strange behaviour or patterns are seen in those setups, simulate presence based on somebody else's light controls, etc. The user's system might detect that one of these linked systems has some statistics that differ considerably from the user's own. For example, the user's friend has more routines set in his system for specific days of the week, while the user 8 does everything manually via widgets each time because he is not aware of this new feature. This triggers the system to become "competitive", according to the mood engine. This implies that the system automatically creates a few routines for the user based on the most common patterns of his specific setup (via the symptoms engine 68) and informs the user 8 (via the need engine 70) what is happening, e.g.: "Hey, your friend has lot of routines, but we don't have any!! Don't let him beat you, create even more! I've already prepared some for you, check them out in the app." In this way, the user 8 is encouraged to discover and use more features which he wasn't using (as much) before by means of competition with another known user.

### Example 6:

In this embodiment the system 30 determines that the user 8 requires a more frequent reminder from the system, so it is decided that the system should get "hungry". In terms of symptoms, this is shown as light parameters that change over time as an indication of how hungry the system is.

For example, a relaxing scene is set at 7pm in the living room, composed of warm white at 70% brightness. At 9pm, the system can decide to start showing the first symptoms, for example in the way of slight changes in brightness (e.g. one lamp goes to 80%, and another one goes to 50%). When this occurs, the system 30 could notify the user via the app 7 as: "Hey, I'm hungry, feed me some scenes!". If the user recalls the same or a different scene, these effects get reset. Otherwise, at 10pm the system could display additional symptoms like lamps deviating from their CCT value or going to more orange or reddish colours. If again the user 8 ignores this, the effects can become each time more noticeable, with larger swings in brightness and hue.

### Example 7:

In this embodiment the system does not perceive any noticeable pattern but instead its random mood generator gets activated. As a result, the system adopts a "tired" mood. In this case, this gets reflected in terms of light effects as a decrease in the overall brightness of scenes when triggered. The user 8 gets prompted via the app a message saying: "I'm too tired today, I don't think I can make the lamps any brighter on my own, help me....!". This is meant to trigger the user into manually adjusting the brightness levels of the affected lamps and by that "helping" the system to recover. The goal of such random moods is to present somewhat more disconnected moods to the user which are also less impactful and easier to understand and compensate for than those based on concrete events. It also ensures that should there be no relevant events taking place the user would still benefit from the system adopting different moods.

Note that in all of the above examples, mood switches can to some extend be triggered in a randomized fashion based on randomized inputs 43, with symptoms for that mood also being triggered to some at random based on randomized inputs 43.

In accordance with the above described techniques, based on how the user controls his/her connected lighting system, the system 30 determines some level of randomness to intentionally introduce deviation from user set activations, targeted to some extent at least on those parts of the lighting system 1 where levels of engagement are lower.

For users that particular enjoy the personality of their lighting system, more extreme personality traits can be implemented. For example, lamps that are not used regularly complain about this e.g. via the app, or if a user continuously uses a switch the app provides a pop-up message inviting the user to use the app and suggest a different scene than the one associated with the switch.

Returning to Figure 1, each of the processors 14, 22 (or, more generally, whichever processor or combination of processors implements the lighting control system 30) can for example take the form of a CPU or set of interconnected CPUs, and in general can be any suitable processing apparatus of the device in question which is configured to fetch executable instructions (i.e. code), such as instructions of the app 7, from a memory (not shown) of the device in question and execute those instructions in order to carry out the functionality of that device described herein. This can be embedded software (firmware), application software, or any other type of software (or any combination thereof). Alternatively, some or all of this functionality can be implemented in (dedicated) hardware of the device in question, such as an application specific integrated circuit (ASIC) or a field-programmable gate array (FPGA) etc. Accordingly, although in the described embodiments the term "module" (or similar) refers to part of the software of the control system 30, in general a module configured to implement certain functionality can refer to software, hardware or any combination thereof that is operable to carry out that functionality. It will be appreciated that the above embodiments have been described by way of example only. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A lighting control system (30) for a lighting system (1) comprising:
- an input for receiving lighting control inputs (31) from a user (8);
- a communication interface (44) for communicating with the lighting system;
- a manual control module (32) configured to control light emitted by illumination sources (4) of the lighting system according to the lighting control inputs from the user; **characterised in that** the lighting control system further comprises:
- an engagement module (34) configured to determine from the lighting control inputs a user engagement level for at least one of the illumination sources, wherein the user engagement level for the at least one of the illumination sources is a measure, generated by the lighting control system, of an extent to which the user has chosen to exert direct, manual control over the at least one of the illumination sources;
- a trigger engine (36) configured to randomly generate control triggers (37) for the at least one illumination source based on the user engagement level, wherein the probability of a control trigger (37) being generated within a time interval increases as the user engagement level decreases; and
- an autonomous control module (38) configured to respond to the randomly generated control triggers (37) for the at least one illumination source, when generated, by autonomously controlling the at least one illumination source to render a lighting effect or autonomously suppressing a lighting effect for the at least one illumination source.

2. A lighting control system according to claim 1, wherein the engagement module is configured, following the rendering or suppressing of the lighting effect, to monitor the user's behaviour for an intended reaction by the user, wherein if the user does not react as intended the probability of a control trigger being generated thereafter decreases.

3. A lighting control system according to claim 2, wherein if the user does react as intended, the probability of generating a control trigger thereafter increases.

4. A lighting control system according to any preceding claim, wherein the user engagement level is determined in dependence on a number of interactions between the user and the at least one illumination source in a time period.

5. A lighting control system according any preceding claim, wherein the user engagement level is determined in dependence on a measure of deviation applied by the user over a time period to at least one characteristic of light emitted by the at least one illumination source.

6. A lighting control system according to claim 5, wherein at least one parameter of a lighting effect rendered autonomously by the autonomous control module is set in dependence on the measure of deviation.

7. A lighting control system according to any preceding claim, wherein the user engagement level is determined based on a number of lighting effects selected by the user for the at least one illumination source over a time period.

8. A lighting control system according to any preceding claim, wherein the user engagement level is a relative user engagement level, determined by detecting a change in the behaviour of the user with respect to the at least one illumination source.

9. A lighting control system according to any preceding claim, wherein the user engagement level is determined by determining: a number of user input devices used to control the at least one illumination source by the user over a time period, and/or an extent to which the at least one illumination source has been controlled by the autonomous control module over a time period.

10. A lighting control system according to any preceding claim, comprising an external data input, wherein the control triggers are generated in dependence on external data received threat.

11. A lighting control system according to any preceding claim, wherein the trigger engine comprises a state selection engine (66) configured to select one of a set of predetermined states for the at least one illumination source in dependence on the user engagement level and a set of randomized inputs, the control triggers being generated in dependence on the state selected for the at least one illumination source.

12. A lighting control system according to claim 2 and 11, wherein the trigger engine is configured to adapt the engagement threshold for the at least one luminaire based on whether the user reacts as intended to the rendering or suppressing of the lighting effect.

13. A lighting control system according to any preceding claim, wherein the trigger engine is configured to compare the user engagement level for the at least one illumination source with an engagement threshold, and selectively generate control triggers at random for the at least one illumination source based on that comparison.

14. A method of controlling a lighting system (1) comprising implementing, by a lighting control system (3), at least the following steps:
- receiving lighting control inputs (31) from a user (8);
- controlling light emitted by illumination sources (4) of the lighting system according to the lighting control inputs from the user; said method **characterised by**
- determining from the lighting control inputs a user engagement level for at least one of the illumination sources, wherein the user engagement level for the at least one of the illumination sources is a measure, generated by the lighting control system, of an extent to which the user has chosen to exert direct, manual control over the at least one of the illumination sources;
- randomly generating control triggers (37) for the at least one illumination source based on the user engagement level, wherein the probability of a control trigger (37) being generated within a time interval increases as the user engagement level decreases; and
- responding to the randomly generated control triggers (37) for the at least one illumination source, when generated, by autonomously controlling the at least one illumination source to render a lighting effect or autonomously suppressing a lighting effect for the at least one illumination source.

15. A computer program product comprising code stored on a computer-readable storage medium and configured, when executed, to perform the method of claim 14.

## Patentansprüche

1. Beleuchtungssteuerungssystem (30) für ein Beleuchtungssystem (1), umfassend:
- einen Eingang zum Empfangen von Beleuchtungssteuerungseingaben (31) von einem Nutzer (8);
- eine Kommunikationsschnittstelle (44) zum Kommunizieren mit dem Beleuchtungssystem;
- ein Manuellsteuerungsmodul (32), das so konfiguriert ist, dass es von Illuminationsquellen (4) des Beleuchtungssystems emittiertes Licht entsprechend den Beleuchtungssteuerungseingaben von dem Nutzer steuert,
**dadurch gekennzeichnet, dass** das Beleuchtungssteuerungssystem weiterhin umfasst:
- ein Engagement-Modul (34), das so konfiguriert ist, dass es anhand der Beleuchtungssteuerungseingaben ein Nutzer-Engagement-Level für mindestens eine der Illuminationsquellen ermittelt, wobei das Nutzer-Engagement-Level für die mindestens eine der Illuminationsquellen ein von dem Beleuchtungssteuerungssystem generiertes Maß eines Umfangs darstellt, inwieweit der Nutzer seiner Wahl nach eine direkte, manuelle Kontrolle über die mindestens eine der Illuminationsquellen ausüben möchte;
- eine Trigger-Engine (36), die so konfiguriert ist, dass sie Steuertrigger (37) für die mindestens eine Illuminationsquelle aufgrund des Nutzer-Engagement-Level nach dem Zufallsprinzip generiert, wobei die Wahrscheinlichkeit, dass ein Steuertrigger (37) innerhalb eines Zeitintervalls erzeugt wird, zunimmt, während das Nutzer-Engagement-Level abnimmt; sowie
- ein autonomes Steuermodul (38), das so konfiguriert ist, dass es auf die nach dem Zufallsprinzip erzeugten Steuertrigger (37) für die mindestens eine Illuminationsquelle nach Erzeugen derselben durch autonomes Steuern der mindestens einen Illuminationsquelle anspricht, um einen Beleuchtungseffekt wiederzugeben oder einen Beleuchtungseffekt für die mindestens eine Illuminationsquelle autonom zu unterdrücken.

2. Beleuchtungssteuerungssystem nach Anspruch 1, wobei das Engagement-Modul so konfiguriert ist, dass es im Anschluss an die Wiedergabe oder Unterdrückung des Beleuchtungseffekts das Verhalten des Nutzers für eine beabsichtigte Reaktion von dem Nutzer überwacht, wobei, wenn der Nutzer nicht, wie beabsichtigt, reagiert, die Wahrscheinlichkeit, dass ein Steuertrigger generiert wird, sich danach verringert.

3. Beleuchtungssteuerungssystem nach Anspruch 2, wobei, wenn der Nutzer, wie beabsichtigt, reagiert, die Wahrscheinlichkeit, dass ein Steuertrigger generiert wird, danach zunimmt.

4. Beleuchtungssteuerungssystem nach einem der vorangegangenen Ansprüche, wobei das Nutzer-Engagement-Level in Abhängigkeit einer Anzahl Interaktionen zwischen dem Nutzer und der mindestens einen Illuminationsquelle in einer Zeitperiode ermittelt wird.

5. Beleuchtungssteuerungssystem nach einem der vorangegangenen Ansprüche, wobei das Nutzer-Engagement-Level in Abhängigkeit eines Abweichungsmaßes, das von dem Nutzer über eine Zeitperiode auf mindestens eine Charakteristik des von der mindestens einen Illuminationsquelle emittierten Lichts angewendet wird.

6. Beleuchtungssteuerungssystem nach Anspruch 5, wobei mindestens ein Parameter eines von dem autonomen Steuermodul autonom wiedergegebenen Beleuchtungseffekts in Abhängigkeit des Abweichungsmaßes eingestellt wird.

7. Beleuchtungssteuerungssystem nach einem der vorangegangenen Ansprüche, wobei das Nutzer-Engagement-Level aufgrund einer Anzahl Beleuchtungseffekte, die von dem Nutzer für die mindestens eine Illuminationsquelle über eine Zeitperiode ausgewählt werden, ermittelt wird.

8. Beleuchtungssteuerungssystem nach einem der vorangegangenen Ansprüche, wobei das Nutzer-Engagement-Level ein relatives Nutzer-Engagement-Level ist, das durch Detektieren einer Veränderung des Verhaltens des Nutzers gegenüber der mindestens einen Illuminationsquelle ermittelt wird.

9. Beleuchtungssteuerungssystem nach einem der vorangegangenen Ansprüche, wobei das Nutzer-Engagement-Level bestimmt wird durch Ermitteln von: einer Anzahl Nutzereingabevorrichtungen, die zur Steuerung der mindestens einen Illuminationsquelle seitens des Nutzers über eine Zeitperiode verwendet werden, und/oder einem Umfang, in dem die mindestens eine Illuminationsquelle von dem autonomen Steuermodul über eine Zeitperiode gesteuert wurde.

10. Beleuchtungssteuerungssystem nach einem der vorangegangenen Ansprüche, mit einer externen Dateneingabe, wobei die Steuertrigger in Abhängigkeit des bei externen Daten erhaltenen Threat generiert werden.

11. Beleuchtungssteuerungssystem nach einem der vorangegangenen Ansprüche, wobei die Trigger-Engine eine Zustandsauswahl-Engine (66) umfasst, die so konfiguriert ist, dass sie einen Zustand aus einem Satz vorgegebener Zustände für die mindestens eine Illuminationsquelle in Abhängigkeit des Nutzer-Engagement-Levels sowie aus einem Satz randomisierter Eingaben auswählt, wobei die Steuertrigger in Abhängigkeit des für die mindestens eine Illuminationsquelle ausgewählten Zustands erzeugt werden.

12. Beleuchtungssteuerungssystem nach Anspruch 2 sowie 11, wobei die Trigger-Engine so konfiguriert ist, dass sie den Engagement-Schwellenwert für die mindestens eine Leuchte in Abhängigkeit davon adaptiert, ob der Nutzer, wie beabsichtigt, auf das Wiedergeben oder Unterdrücken des Beleuchtungseffekts reagiert.

13. Beleuchtungssteuerungssystem nach einem der vorangegangenen Ansprüche, wobei die Trigger-Engine so konfiguriert ist, dass sie das Nutzer-Engagement-Level für die mindestens eine Illuminationsquelle mit einem Engagement-Schwellenwert vergleicht und nach dem Zufallsprinzip Steuertrigger für die mindestens eine Illuminationsquelle auf der Grundlage dieses Vergleichs selektiv erzeugt.

14. Verfahren zur Steuerung eines Beleuchtungssystems (1), das beinhaltet, dass von einem Beleuchtungssteuerungssystem (3) zumindest die folgenden Schritte implementiert werden, wonach:
- Beleuchtungssteuerungseingaben (31) von einem Nutzer (8) empfangen werden;
- von Illuminationsquellen (4) des Beleuchtungssystems emittiertes Licht entsprechend den Beleuchtungssteuerungseingaben von dem Nutzer gesteuert wird;
wobei dieses Verfahren **dadurch gekennzeichnet ist, dass** es beinhaltet, dass:
- anhand der Beleuchtungssteuerungseingaben ein Nutzer-Engagement-Level für mindestens eine der Illuminationsquellen ermittelt wird, wobei das Nutzer-Engagement-Level für die mindestens eine der Illuminationsquellen ein von dem Beleuchtungssteuerungssystem generiertes Maß eines Umfangs darstellt, inwieweit der Nutzer seiner Wahl nach eine direkte, manuelle Kontrolle über die mindestens eine der Illuminationsquellen ausüben möchte;
- Steuertrigger (37) für die mindestens eine Illuminationsquelle aufgrund des Nutzer-Engagement-Level nach dem Zufallsprinzip generiert werden, wobei die Wahrscheinlichkeit, dass ein Steuertrigger (37) innerhalb eines Zeitintervalls erzeugt wird, zunimmt, während das Nutzer-Engagement-Level abnimmt; und
- auf die nach dem Zufallsprinzip erzeugten Steuertrigger (37) für die zumindest eine Illuminationsquelle nach Erzeugen derselben durch autonomes Steuern der mindestens einen Illuminationsquelle reagiert wird, um einen Beleuchtungseffekt wiederzugeben oder einen Beleuchtungseffekt für die mindestens eine Illuminationsquelle autonom zu unterdrücken.

15. Computerprogrammprodukt, das einen auf einem computerlesbaren Speichermedium gespeicherten Code umfasst und so konfiguriert ist, dass es bei Ausführung das Verfahren nach Anspruch 14 durchführt.

## Revendications

1. Système de commande d'éclairage (30) pour un système d'éclairage (1) comprenant :
- une entrée pour recevoir des entrées de commande d'éclairage (31) en provenance d'un utilisateur (8) ;
- une interface de communication (44) pour communiquer avec le système d'éclairage ;
- un module de commande manuelle (32) configuré pour commander de la lumière émise par des sources d'éclairage (4) du système d'éclairage selon les entrées de commande d'éclairage en provenance de l'utilisateur ; **caractérisé en ce que** le système de commande d'éclairage comprend en outre :
- un module d'engagement (34) configuré pour déterminer, à partir des entrées de commande d'éclairage, un niveau d'engagement d'utilisateur pour au moins une des sources d'éclairage, dans lequel le niveau d'engagement d'utilisateur pour l'au moins une des sources d'éclairage est une mesure, générée par le système de commande d'éclairage, d'un degré jusqu'auquel l'utilisateur a choisi d'exercer une commande manuelle directe sur l'au moins une des sources d'éclairage ;
- un moteur de déclenchement (36) configuré pour générer de manière aléatoire des déclencheurs de commande (37) pour l'au moins une source d'éclairage sur la base du niveau d'engagement d'utilisateur, dans lequel la probabilité qu'un déclencheur de commande (37) soit généré au sein d'un intervalle de temps augmente alors que le niveau d'engagement d'utilisateur diminue ; et
- un module de commande autonome (38) configuré pour répondre aux déclencheurs de commande (37) générés de manière aléatoire pour l'au moins une source d'éclairage, lorsqu'ils sont générés, en commandant de manière autonome à l'au moins une source d'éclairage de restituer un effet d'éclairage ou en supprimant de manière autonome un effet d'éclairage pour l'au moins une source d'éclairage.

2. Système de commande d'éclairage selon la revendication 1, dans lequel le module d'engagement est configuré, à la suite de la restitution ou de la suppression de l'effet d'éclairage, pour contrôler le comportement de l'utilisateur pour une réaction prévue par l'utilisateur, dans lequel, si l'utilisateur ne réagit pas comme prévu, la probabilité qu'un déclencheur de commande soit ensuite généré diminue.

3. Système de commande d'éclairage selon la revendication 2, dans lequel, si l'utilisateur ne réagit pas comme prévu, la probabilité de générer ensuite un déclencheur de commande diminue.

4. Système de commande d'éclairage selon l'une quelconque des revendications précédentes, dans lequel le niveau d'engagement d'utilisateur est déterminé en fonction d'un nombre d'interactions entre l'utilisateur et l'au moins une source d'éclairage dans une période de temps.

5. Système de commande d'éclairage selon l'une quelconque des revendications précédentes, dans lequel le niveau d'engagement d'utilisateur est déterminé en fonction d'une mesure de déviation appliquée par l'utilisateur sur une période de temps à au moins une caractéristique d'une lumière émise par l'au moins une source d'éclairage.

6. Système de commande d'éclairage selon la revendication 5, dans lequel au moins un paramètre d'un effet d'éclairage restitué de manière autonome par le module de commande autonome est réglé en fonction de la mesure de déviation.

7. Système de commande d'éclairage selon l'une quelconque des revendications précédentes, dans lequel le niveau d'engagement d'utilisateur est déterminé sur la base d'un nombre d'effets d'éclairage choisi par l'utilisateur pour l'au moins une source d'éclairage sur une période de temps.

8. Système de commande d'éclairage selon l'une quelconque des revendications précédentes, dans lequel le niveau d'engagement d'utilisateur est un niveau d'engagement d'utilisateur relatif, déterminé en détectant un changement dans le comportement de l'utilisateur par rapport à l'au moins une source d'éclairage.

9. Système de commande d'éclairage selon l'une quelconque des revendications précédentes, dans lequel le niveau d'engagement d'utilisateur est déterminé en déterminant : un nombre de dispositifs d'entrée utilisateur utilisés pour commander l'au moins une source d'éclairage par l'utilisateur sur une période de temps, et/ou un degré jusqu'auquel l'au moins une source d'éclairage a été commandée par le module de commande autonome sur une période de temps.

10. Système de commande d'éclairage selon l'une quelconque des revendications précédentes, comprenant une entrée de données externes, dans lequel les déclencheurs de commande sont générés en fonction d'une menace de données externes reçues.

11. Système de commande d'éclairage selon l'une quelconque des revendications précédentes, dans lequel le moteur de déclenchement comprend un moteur de sélection d'état (66) configuré pour choisi un parmi un ensemble d'états prédéterminés pour l'au moins une source d'éclairage en fonction du niveau d'engagement d'utilisateur et un ensemble d'entrées aléatoires, les déclencheurs de commande étant générés en fonction de l'état choisi pour l'au moins une source d'éclairage.

12. Système de commande d'éclairage selon la revendication 2 et 11, dans lequel le moteur de déclenchement est configuré pour adapter le seuil d'engagement pour l'au moins un luminaire sur la base du fait que l'utilisateur réagit ou non comme prévu à la restitution ou à la suppression de l'effet d'éclairage.

13. Système de commande d'éclairage selon l'une quelconque des revendications précédentes, dans lequel le moteur de déclenchement est configuré pour comparer le niveau d'engagement d'utilisateur pour l'au moins une source d'éclairage avec un seuil d'engagement, et générer de manière sélective des déclencheurs de commande au hasard pour l'au moins une source d'éclairage sur la base de cette comparaison.

14. Procédé consistant à commander un système d'éclairage (1) comprenant l'implémentation, par un système de commande d'éclairage (3), d'au moins les étapes suivantes consistant à :
- recevoir des entrées de commande d'éclairage (31) en provenance d'un utilisateur (8) ;
- commander de la lumière émise par des sources d'éclairage (4) du système d'éclairage selon les entrées de commande d'éclairage en provenance de l'utilisateur, ledit procédé **caractérisé par** le fait de
- déterminer, à partir des entrées de commande d'éclairage, un niveau d'engagement d'utilisateur pour au moins une des sources d'éclairage, dans lequel le niveau d'engagement d'utilisateur pour l'au moins une des sources d'éclairage est une mesure, générée par le système de commande d'éclairage, d'un degré jusqu'auquel l'utilisateur a choisi d'exercer une commande manuelle directe sur l'au moins une des sources d'éclairage ;
- générer de manière aléatoire des déclencheurs de commande (37) pour l'au moins une source d'éclairage sur la base du niveau d'engagement d'utilisateur, dans lequel la probabilité qu'un déclencheur de commande (37) soit généré au sein d'un intervalle de temps augmente alors que le niveau d'engagement d'utilisateur diminue ; et
- répondre aux déclencheurs de commande (37) générés de manière aléatoire pour au moins une source d'éclairage, lorsqu'ils sont générés, en commandant de manière autonome à l'au moins une source d'éclairage de restituer un effet d'éclairage ou en supprimant de manière autonome un effet d'éclairage pour l'au moins une source d'éclairage.

15. Produit de programme informatique comprenant un code stocké sur un support de stockage lisible par ordinateur et configuré, lorsqu'il est exécuté, pour effectuer le procédé selon la revendication 14.
